# EUROPÄISCHE PATENTSCHRIFT

(11) **EP 4 182 578 B1**
(45) Veröffentlichungstag und Bekanntmachung des Hinweises auf die Patenterteilung: **09.10.2024**
(21) Anmeldenummer: 21733939.9
(22) Anmeldetag: 14.06.2021
(51) Int. Cl.: F16H 3/00, F16H 3/093, F16H 3/08

(54) **ANTRIEBSSTRANG**
DRIVE TRAIN
CHAÎNE CINÉMATIQUE

(30) Priorität: 20.07.2020 DE 102020209069
(43) Veröffentlichungstag der Anmeldung: 24.05.2023
(73) Patentinhaber: Magna PT B.V. & Co. KG, 74199 Untergruppenbach (DE)
(72) Erfinder: STRAMM, Sebastian, 50829 Köln (DE); DORNHEGE, Tobias, 40589 Düsseldorf (DE)
(74) Vertreter: Rausch, Gabriele
(86) Internationale Anmeldenummer: PCT/EP2021/065969
(87) Internationale Veröffentlichungsnummer: WO 2022/017686

(56) Entgegenhaltungen:
- DE-A1- 10 133 695
- DE-A1- 102016 007 408
- DE-A1- 102018 220 592

## Beschreibung

Die Erfindung betrifft einen Antriebsstrang mit einer elektrischen Maschine, einer Verbrennungskraftmaschine, einem Getriebe, das aus zwei Teilgetrieben besteht, wobei jedem Teilgetriebe Radsätze mit Festrädern und Losrädern zugeordnet sind, die für Gangstufen stehen. Die Verbrennungskraftmaschine ist über eine Doppelkupplung an das Getriebe anbindbar. Hinzukommt eine elektrische Maschine, die wahlweise an eines der beiden Teilgetriebe fest angebunden ist.

### Stand der Technik

Hybridisierte Antriebsstränge sind dem Stand der Technik in vielerlei Variationen bekannt geworden. Sie beinhalten ein Getriebe in Form eines Stirn- oder Planetenradgetriebes, einen Antriebsmotor wie einer Verbrennungskraftmaschine und einen weiteren Antriebsmotor wie eine elektrische Maschine, sodass die jeweilige Antriebsleistung beider Maschinen kombiniert oder separat an den Abtrieb übertragen werden kann.

Die Verbrennungskraftmaschine ist üblicherweise mittels einer Anfahrkupplung mit dem Getriebe koppelbar, wohingegen die elektrische Maschine je nach Bedarf an unterschiedlichen Stellen an den Antriebstrang angebunden ist.

Ist die elektrische Maschine zwischen der Verbrennungskraftmaschine und dem Getriebe angeordnet oder direkt mit dem Getriebe gekoppelt, können die verbrennungskraftmotorischen Gangstufen von der elektrischen Maschine zumindest teilweise mit genutzt werden. Daraus ergibt sich der Vorteil, dass man ohne großen Aufwand schon bestehende Getriebe einfach um eine elektrische Maschine erweitern kann.

Auch ist dem Stand der Technik ein Antriebsstrang bekannt geworden, deren elektrische Maschine mit dem Abtrieb gekoppelt ist, was als Parallel-Hybrid in P3 Konfiguration bekannt ist.

Die Anbindung erfolgt üblicherweise mittels eines Zugmitteltriebes, einer Stirnradstufe oder einem Planetenradsatz, wobei vorzugsweise eine Übersetzungsstufe gewählt wird, mit der die elektrische Maschine in einem effizienten, hohen Drehzahlbereich betrieben werden kann.

Ein einfacheres Doppelkupplungsgetriebe mit vier Gangstufen und dem Eintrieb einer elektrischen Maschine ist in mehrere Ausführungsformen aus der DE 10 2016 007 408 A1 bekannt. Dabei werden Gangstufen durch Radpaarungen dargestellt, die für die erste und die dritte Gangstufe auf einem Teilgetriebe, und für die zweite und vierte Gangstufe auf dem zweiten Teilgetriebe angeordnet sind. Durch die Verwendung von Fest- und Losrädern sowie Schaltkupplungen sind verschiedene Antriebsszenarien darstellbar.

Die Anordnung der Getriebekomponenten in Kombination mit der fest angebundenen E-Maschine an eines der beiden Teilgetriebe lässt keine zugkraftunterbrechungsfreie Schaltung bei rein elektrischem Antrieb zu.

In der DE 10 2019 211 449 A1 wird ein Getriebe beschrieben, wie es im Prinzip in Figur 1 dargestellt ist. Dabei wird die elektrische Maschine an ein separates Eingangsrad in einem der Teilgetriebe angebunden. Dieses elektrische Eingangsrad nimmt auf der jeweiligen Eingangswelle des Getriebes Platz ein. Die Gesamtlänge des Getriebes erhöht sich dadurch. Des Weiteren unterliegt der Durchmesser des elektrischen Eingangsrades auf der jeweiligen Eingangswelle durch die auf der Ausgangswelle danebenliegenden Synchronisierungseinheit Beschränkungen.

Damit ist die Übersetzung zwischen Elektromotor und Getriebeeingangswelle eingeschränkt. Hierdurch kann die Übersetzung der elektrischen Maschine nicht den angestrebten Wert von circa 2,7 erreichen, sondern ist auf etwa einen Wert von 1,7 - 1,9 beschränkt.

Hierdurch ergeben sich funktionale Nachteile bezüglich Laden der Batterie im Kriechen und bezüglich der Rekuperationsleistung.

Aus der DE 10 2016 207 221 A1 ist ein Antriebsstrang bekannt, der eine elektrische Maschine an einem ersten Teilgetriebe anbindet, wobei eine zweite Gangstufe verwendet wird. Das elektrifizierte Teilgetriebe trägt dabei die Gangstufen 2 und 4. Der fünfte Gang wird über das Festrad der dritten Gangstufe dargestellt.

Aus der DE 10 2011 088 593 A1 ist ein Antrieb mit Doppelkupplungsgetriebe bekannt, das pro Eingangswelle drei Räder, Festräder und ein Losrad trägt. Die Anordnung verlangt einen großen axialen Bauraum.

DE 10 2016 007 408 A1 zeigt ein Doppelkupplungsgetriebe mit einer elektrischen Maschine, die an eines der Teilgetriebe angebunden ist. Die Losräder für die Darstellung der Gangstufen 1 bis 4 sind dabei auf einer der Vorgelegewellen konzentriert, sodass die axiale Ausdehnung entsprechend groß ist.

DE 101 33 695 A1 zeigt ein Getriebe mit einer Eingangs- und einer Ausgangswelle. Zwischen der Eingangs- und der Ausgangswelle des Getriebes befindet sich eine Reihe von Zahnradpaaren, die jeweils aus einem festen Rad auf einer entsprechenden Welle und einem losen Rad bestehen, das mit einer der Wellen verbunden werden kann. Zwischen der Getriebeausgangswelle und einer der Getriebeeingangswellen befinden sich Zahnräder mit unterschiedlichen Übertragungsstufen. Mindestens eine Eingangswelle wird vorübergehend von einer Antriebseinheit mit Antriebswelle angetrieben, die mit einer ersten elektrischen Maschine verbunden werden kann. Mindestens ein Zahnrad wird automatisch durch mindestens einen Aktuator eingelegt.

Es ist Aufgabe der Erfindung eine verbesserte Getriebeanordnung, nämlich ein lastschaltfähiges, kurzes Hybridgetriebe mit optimierter Übersetzung für den elektrischen Eingang herzustellen.

### Beschreibung der Erfindung

Die Aufgabe wird gelöst mit einem Antriebsstrang mit einer elektrischen Maschine, einer Verbrennungskraftmaschine, einem Getriebe, das aus zwei Teilgetrieben besteht, wobei jedem Teilgetriebe Radsätze mit Festrädern und Losrädern zugeordnet sind, die für Gangstufen stehen, und wobei die Verbrennungskraftmaschine an das Getriebe über eine Doppelkupplung mit einer ersten und zweiten Kupplung anbindbar ist und die elektrische Maschine an das erste Teilgetriebe anbindbar ist, wobei das erste Teilgetriebe mit einer ersten Antriebswelle an die Verbrennungskraftmaschine über die erste Kupplung anbindbar ist und in Richtung - weg von der Verbrennungskraftmaschinen- ein Festrad für einen fünfte Gangstufe und ein Festrad für eine dritte Gangstufe aufweist, und das zweite Teilgetriebe mit einer zweiten Antriebswelle an die Verbrennungskraftmaschine über die zweite Kupplung anbindbar ist und die zweite und die vierte Gangstufe aufweist, wobei die fünfte Gangstufe axial zwischen der vierten Gangstufe und einer zwischen der dritten und der fünften Gangstufe angeordneten Brückenkupplung angeordnet ist und zum Eintrieb der elektrischen Maschine dient, wobei durch eine axiale Aufspreizung der baulichen Anordnung der Festräder und Losräder entlang der ersten und zweiten Antriebswelle eine Lücke zwischen dem Festrad der vierten Gangstufe und der Brückenkupplung geschaffen wird, in die das Festrad der fünften Gangstufe eintaucht, das zugleich als elektrisches Eingangsrad auf der ersten Antriebswelle dient, über die die elektrische Antriebsmaschine angebunden ist.

Durch eine Synchronisierung zwischen den Losrädern des dritten und vierten Gangs können die beiden Teilgetriebe gekoppelt werden, wodurch zusätzlich zu den vier physischen Gangstufen zusätzlich zwei weitere Gangstufen dargestellt werden können. Eine dieser Gangstufen ist kürzer als der physische zweite Gang übersetzt, eine der zusätzlichen Gangstufen ist länger als der physische fünfte Gang übersetzt.

Durch eine axiale Aufspreizung des Bauraums zwischen der Brückenkupplung und der vierten Gangstufe wird eine Lücke geschaffen. Hier kann ein größeres Gangrad in die erste Abtriebswelle eintauchen.

Durch die Doppelverwendung dieses fünften Ganges als elektrisches Eingangsrad kann sogar insgesamt etwa 10 mm axialer Bauraum eingespart werden. Hierdurch wandert das Losrad für die fünfte Gangstufe auf die zweite Ausgangswelle, wo die noch ungenutzte Seite der Rückwärtsgangsynchronisation genutzt wird.

Je nach Achsabständen und Anforderungen bezüglich Rückwärtsgang- und höchster-Gang-Übersetzung können auch die zweite Gangstufe und die Rückwärtsgangstufe zwischen den Wellen getauscht werden.

### Beschreibung der Figuren

Die Erfindung wird nachfolgend beispielhaft unter Bezugnahme auf die beigefügte Zeichnung beschrieben.
Fig. 1 zeigt eine schematische Darstellung eines Hybridgetriebes mit 6 Gängen, und Anbindung der E-Maschine über ein dediziertes Gangrad auf einer Eingangswelle.
Fig. 2 zeigt eine zweite Ausführungsform eines Hybridgetriebes.

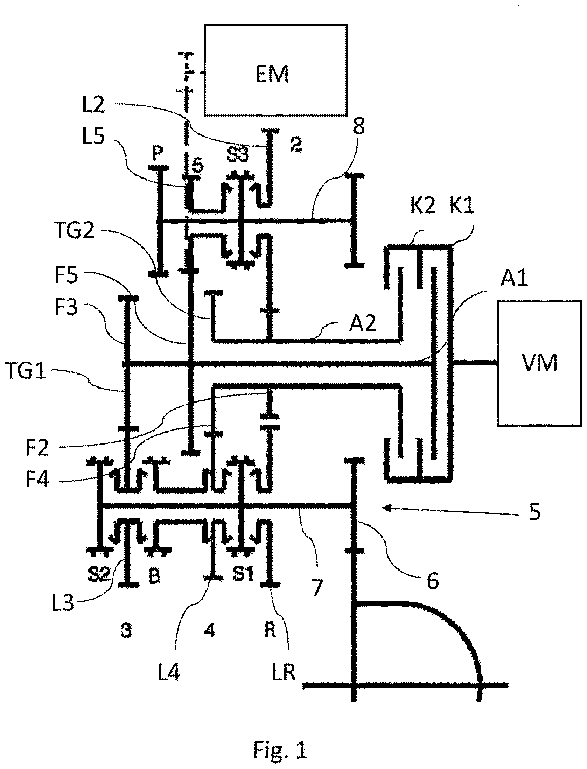

In Figur 1 ist ein Antriebsstrang 1 zu erkennen, der einen Verbrennungsmotor VM aufweist, der mit einer Doppelkupplung verbunden ist. Die Doppelkupplung besteht aus einer ersten und zweiten Kupplung K1 und K2, die unabhängig voneinander betätigbar sind. Weiterhin weist der Antriebsstrang ein Getriebe 5 mit zwei Teilgetrieben TG1 und TG2 auf, die entlang der ersten und zweiten Antriebswelle A1 und A2 angeordnet sind. Auf der dem ersten Teilgetriebe TG1 zugeordneten ersten Antriebswelle A1 sind die Gangstufen 3 und 5 mit den Festrädern F3 und F5 angeordnet. Auf dem zweiten Teilgetriebe TG2 sind die Radsätze für die Gangstufen 4 und 2 auf der zweiten Antriebswelle A2 mit den Festrädern F4 und F2 angeordnet. Eine Abtriebswelle 7 trägt die einseitig genutzte Schaltkupplung S2, die das Losrad L3 der dritten Gangstufe ankoppeln kann sowie die Losräder der vierten L4 und Rückwärts-Gangstufe LR, die über die Schaltkupplung S1 mit der Abtriebswelle 7 verbunden werden kann. Axial in der Ebene zwischen der Gangstufe des 3. und 5. Gang , also zwischen dem Festrad F5 und Losrad L5 sowie dem Festrad F3 und Losrad L3 liegt eine Schaltkupplung B, die die Losräder der Gänge 3 und 4, L3 und L4, somit also beide Teilgetriebe TG1 und TG2 verbinden kann. Die Abtriebswelle 7 verbindet über einen Radsatz 6 die Abtriebsenergie des Getriebes 5 mit den Antriebsrädern des Fahrzeugs, über beispielsweise ein Differential. Eine weitere zweite Abtriebswelle 8 trägt zwei, über eine Schaltung S3 schaltbare Losräder für die Gangstufen 5 und 2, L5 und L2 und optional eine Parksperre P. Durch eine axiale Aufspreizung der baulichen Anordnung der Festräder und Losräder entlang der ersten und zweiten Antriebswelle A1 und A2 wird eine Lücke zwischen dem Festrad der vierten Gangstufe F4 und der Brückenkupplung B geschaffen. In diesen Bauraum taucht das Festrad der fünften Gangstufe F5 ein, das zugleich als elektrisches Eingangsrad auf der ersten Antriebswelle A1 dient, über die die elektrische Antriebsmaschine EM angebunden ist.

Für einen rein elektrischen Betrieb über die elektrische Maschine EM bleibt der Verbrennungsmotor VM vom Antriebsstrang abgekoppelt, indem die erste Kupplung K1 offenbleibt. Durch verschiedene Schaltstellungen der Schaltkupplungen S1, S2 und S3 kann rein elektrisch in den Gangstufen 1, 3, 5 und Rückwärts gefahren werden, wobei für die Gangstufen 1 und Rückwärts auch die zweite Kupplung K2 zwingend offen sein muss.

Auch kann über eine geschlossene Schaltkupplung B die Übersetzung der 3. und 4. Gangstufe genutzt werden, um das Moment des Elektromotors EM an der Kupplung zu überhöhen, um so einen Motorstart auch gegen ein hohes Motorschleppmoment zu ermöglichen.

Das zweite Teilgetriebe TG2 weist die zweite und vierte Gangstufe auf.

Das Festrad F2 der zweiten Gangstufe ist mit einem Losrad L2 der zweiten Gangstufe auf der zweiten Abtriebswelle 8 verbunden. Dieses Losrad L2 kämmt mit einem Rückwärtsgang-Schaltrad LR, das auf der ersten Abtriebswelle 7 angeordnet ist.

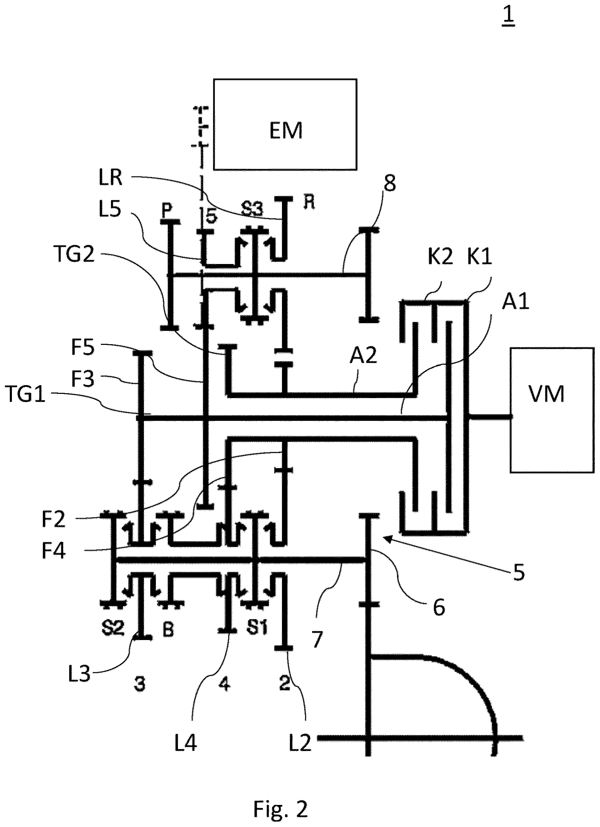

Die Ausführungsform nach Figur 2 tauscht die Losräder der zweiten Gangstufe und des Rückwärtsgangs gegeneinander.

Auch die die axiale Anordnung der Brückenkupplung und der fünften Gangstufe kann getauscht werden. Allerdings ergeben sich günstigere Verhältnisse, wenn der zweite und der fünfte Gang auf der zweiten Ausgangswelle 8 liegen.

Ein nicht lastschaltbarer siebter Gang kann noch am Wellenende der Abtriebswelle 7 hinzugefügt werden.

## Patentansprüche

1. Antriebsstrang (1) mit einer elektrischen Maschine (EM), einer Verbrennungskraftmaschine (VM), einem Getriebe (5), das aus zwei Teilgetrieben (TG1, TG2) besteht, wobei jedem Teilgetriebe (TG1, TG2) Radsätze mit Festrädern und Losrädern zugeordnet sind, die für Gangstufen stehen, und wobei die Verbrennungskraftmaschine (VM) an das Getriebe (5) über eine Doppelkupplung mit einer ersten und zweiten Kupplung (K1, K2) anbindbar ist und die elektrische Maschine (EM) an das erste Teilgetriebe (TG1) anbindbar ist, wobei das erste Teilgetriebe (TG1) mit einer ersten Antriebswelle (A1) an die Verbrennungskraftmaschine (VM) über die erste Kupplung (K1) anbindbar ist und in Richtung - weg von der Verbrennungskraftmaschinenein Festrad für eine fünfte Gangstufe (F5) und ein Festrad für eine dritte Gangstufe (F3) aufweist, und das zweite Teilgetriebe (TG2) mit einer zweiten Antriebswelle (A2) an die Verbrennungskraftmaschine (VM) über die zweite Kupplung (K2) anbindbar ist und die zweite und die vierte Gangstufe mit den Festrädern (F2, F4) aufweist, wobei die fünfte Gangstufe mit dem Festrad (F5) und dem Losrad (L5) axial zwischen der vierten Gangstufe mit dem Festrad (F4) am zweiten Teilgetriebes (TG2) und einer zwischen den Losrädern der dritten und der fünften Gangstufe (L3, L5) auf einer Abtriebswelle (7) angeordneten Brückenkupplung (B) angeordnet ist und zum Eintrieb der elektrischen Maschine (EM) dient, **dadurch gekennzeichnet, dass** durch eine axiale Aufspreizung der baulichen Anordnung der Festräder und Losräder entlang der ersten und zweiten Antriebswelle (A1, A2) eine Lücke zwischen dem Festrad der vierten Gangstufe (F4) und der Brückenkupplung (B) geschaffen wird, in die das Festrad der fünften Gangstufe (F5) eintaucht, das zugleich als elektrisches Eingangsrad auf der ersten Antriebswelle (A1) dient, über die die elektrische Antriebsmaschine (EM) angebunden ist.

2. Antriebsstrang nach Anspruch 1, **dadurch gekennzeichnet, dass** zwei Abtriebswellen (7,8) vorhanden sind und die Brückenkupplung (B) auf der ersten Abtriebswelle (7) zwischen Losrädern der dritten und der vierten Gangstufe (L3, L4) angeordnet ist.

3. Antriebsstrang nach Anspruch 1, **dadurch gekennzeichnet, dass** mindestens das Losrad der fünften Gangstufe (L5) auf der zweiten Abtriebswelle (8) angebracht ist.

4. Antriebsstrang nach Anspruch 2, **dadurch gekennzeichnet, dass** das Losrad (L2) auf der zweiten Abtriebswelle (8) Teil einer Zahnradpaarung ist, die eine zweite Gangstufe darstellt.

5. Antriebsstrang nach Anspruch 2, **dadurch gekennzeichnet, dass** das Losrad (LR) auf der zweiten Abtriebswelle (8) Teil eine Zahnradpaarung ist, die einen Rückwärtsgang darstellt.

## Claims

1. Drive train (1) having an electric machine (EM), an internal combustion engine (VM), a transmission (5) which consists of two sub-transmissions (TG1, TG2), wherein each sub-transmission (TG1, TG2) is assigned gear sets having fixed gears and idler gears which represent gear stages, and wherein the internal combustion engine (VM) is able to be linked to the transmission (5) by way of a dual clutch having a first and a second clutch (K1, K2), and the electric machine (EM) is able to be linked to the first sub-transmission (TG1), wherein the first sub-transmission (TG1) by a first drive shaft (A1) is able to be linked to the internal combustion engine (VM) by way of the first clutch (K1) and - in the direction away from the internal combustion engine - has a fixed gear for a fifth gear stage (F5) and a fixed gear for a third gear stage (F3), and the second sub-transmission (TG2) by a second drive shaft (A2) is able to be linked to the internal combustion engine (VM) by way of the second clutch (K2) and has the second and the fourth gear stage with the fixed gears (F2, F4); wherein the fifth gear stage with the fixed gear (F5) and the idler gear (L5) is disposed axially between the fourth gear stage with the fixed gear (F4) on the second sub-transmission (TG2) and a bridging clutch (B) which on an output shaft (7) is disposed between the idler gears of the third and the fifth gear stage (L3, L5) and serves to input the drive of the electric machine (EM), **characterized in that** a gap between the fixed gear of the fourth gear stage (F4) and the bridging clutch (B), into which the fixed gear of the fifth gear stage (F5) plunges, is achieved by axially expanding the structural arrangement of the fixed gears and idler gears along the first and the second drive shaft (A1, A2), said fixed gear of the fifth gear stage (F5) simultaneously serving as an electrical input gear on the first drive shaft (A1), by way of which the electric drive machine (EM) is linked.

2. Drive train according to Claim 1, **characterized in that** two output shafts (7, 8) are present, and the bridging clutch (B) is disposed on the first output shaft (7) between idler gears of the third and the fourth gear stage (L3, L4).

3. Drive train according to Claim 1, **characterized in that** at least the idler gear of the fifth gear stage (L5) is attached to the second output shaft (8).

4. Drive train according to Claim 2, **characterized in that** the idler gear (L2) on the second output shaft (8) is part of a gearwheel pairing that represents a second gear stage.

5. Drive train according to Claim 2, **characterized in that** the idler gear (LR) of the second output shaft (8) is part of a gearwheel pairing that represents a reverse gear.

## Revendications

1. Chaîne cinématique (1) avec une machine électrique (EM), un moteur à combustion interne (VM), une boîte de vitesses (5) qui est constituée de deux boîtes de vitesses partielles (TG1, TG2), des jeux de pignons avec des pignons fixes et des pignons fous étant associés à chaque boîte de vitesses partielle (TG1, TG2), qui représentent des rapports de vitesse, et le moteur à combustion interne (VM) pouvant être relié à la boîte de vitesses (5) par l'intermédiaire d'un double embrayage avec un premier et un deuxième embrayage (K1, K2) et la machine électrique (EM) pouvant être reliée à la première boîte de vitesses partielle (TG1), la première boîte de vitesses partielle (TG1) pouvant être reliée par un premier arbre d'entraînement (A1) au moteur à combustion interne (VM) par l'intermédiaire du premier embrayage (K1) et présentant, dans la direction opposée au moteur à combustion interne, un pignon fixe pour un cinquième rapport de vitesse (F5) et un pignon fixe pour un troisième rapport de vitesse (F3), et la deuxième boîte de vitesses partielle (TG2) pouvant être reliée par un deuxième arbre d'entraînement (A2) au moteur à combustion interne (VM) par l'intermédiaire du deuxième embrayage (K2) et présentant le deuxième et le quatrième rapport de vitesse avec les pignons fixes (F2, F4), le cinquième rapport de vitesse avec le pignon fixe (F5) et le pignon fou (L5) étant agencé axialement entre le quatrième rapport de vitesse avec le pignon fixe (F4) sur la deuxième boîte de vitesses partielle (TG2) et un embrayage à pont (B) agencé entre les pignons fous du troisième et du cinquième rapport de vitesse (L3, L5) sur un arbre de sortie (7), et servant à l'entraînement de la machine électrique (EM), **caractérisée en ce que**, par un écartement axial de l'agencement structurel des pignons fixes et des pignons fous le long du premier et du deuxième arbre d'entraînement (A1, A2), un espace est créé entre le pignon fixe du quatrième rapport de vitesse (F4) et l'embrayage à pont (B), dans lequel plonge le pignon fixe du cinquième rapport de vitesse (F5), qui sert en même temps de pignon d'entrée électrique sur le premier arbre d'entraînement (A1), par l'intermédiaire duquel la machine d'entraînement électrique (EM) est reliée.

2. Chaîne cinématique selon la revendication 1, **caractérisée en ce que** deux arbres de sortie (7, 8) sont présents, et l'embrayage à pont (B) est agencé sur le premier arbre de sortie (7) entre les pignons fous des troisième et quatrième rapports de vitesse (L3, L4).

3. Chaîne cinématique selon la revendication 1, **caractérisée en ce qu'**au moins le pignon fou du cinquième rapport de vitesse (L5) est monté sur le deuxième arbre de sortie (8).

4. Chaîne cinématique selon la revendication 2, **caractérisée en ce que** le pignon fou (L2) sur le deuxième arbre de sortie (8) fait partie d'un couple d'engrenages qui constitue un deuxième rapport de vitesse.

5. Chaîne cinématique selon la revendication 2, **caractérisée en ce que** le pignon fou (LR) sur le deuxième arbre de sortie (8) fait partie d'une paire d'engrenages qui constitue un rapport de marche arrière.
